# EUROPÄISCHE PATENTANMELDUNG

(11) **EP 4 438 913 A1**
(43) Veröffentlichungstag der Anmeldung: **02.10.2024**
(21) Anmeldenummer: 23164465.9
(22) Anmeldetag: 27.03.2023
(51) Int. Cl.: F16B 13/14

(54) **EINSATZSTÜCK ZUR ZENTRIERUNG EINER STANGE IN EINEM BOHRLOCH**

(71) Anmelder: Henkel AG & Co. KGaA, 40589 Düsseldorf (DE)
(72) Erfinder: STAPF, Gordian Andreas, 6203 Sempach Station (CH); PREIBISCH, Michael, 6203 Sempach Station (CH)
(74) Vertreter: Wagner Albiger & Partner Patentanwälte mbB

(57) **Zusammenfassung**

Die Erfindung betrifft ein Einsatzstück (10) zur Zentrierung einer Stange (50) in einem Bohrloch (41), in dem sich Klebstoff (60) befindet, der zur Verankerung der Stange (50) in dem Bohrloch (41) dient, wobei das Einsatzstück (10) einen Hülsenkörper (11) mit einem Innenhohlraum (15) zur Aufnahme der Stange (50) und eine Außenfläche (16) aufweist, wobei in Gebrauchslage des Einsatzstücks (10) der Hülsenkörper (11) an einem offenen Ende (42) des Bohrlochs (41) axial festgelegt ist und die Außenfläche (15) des Hülsenkörpers (11) einer Innenwand (44) des Bohrlochs (41) gegenübersteht. Die Erfindung zeichnet sich dadurch aus, dass eine zusätzliche Zentriereinheit (12) vorgesehen ist, die in einem Ursprungszustand des Einsatzstücks (10) über wenigstens eine Sollbruchstelle (13) mit dem Hülsenkörper (10) verbunden ist und eine Auflagefläche zur axialen Anlage der Stange (50) aufweist, sodass beim Einführen der Stange (50) in das Bohrloch (41) und nach erfolgter Trennung der Sollbruchstelle (13) die Zentriereinheit (12) mit der Stange (50) axial mitbewegt wird, wobei sich ein axiales Ende (52) der Stange (50) in radialer Richtung über die Zentriereinheit (11) an der Innenwand (44) des Bohrlochs (41) abstützt.

## Beschreibung

Die Erfindung betrifft ein Einsatzstück zur Zentrierung einer Stange in einem Bohrloch, in dem sich Klebstoff befindet, der zur Verankerung der Stange in dem Bohrloch dient.

Aus der US 2001/0025436 A1 ist ein Einsatzstück bekannt, das sich in ein Bohrloch einsetzen lässt. Das Einsatzstück weist dabei einen Hülsenkörper mit einem Innenhohlraum zur Aufnahme der Stange auf. Eine Außenfläche des Hülsenkörpers steht im eingesetzten Zustand des Einsatzstücks einer Innenwand des Bohrlochs gegenüber bzw. liegt an dieser an. Das Bohrloch ist gestuft ausgebildet, wobei der Hülsenkörper in einem ersten Abschnitt des Bohrloches mit größerem Durchmesser sitzt. Durch axiale Anlage des Hülsenkörper an dem stufenförmigen Übergang zu einem zweiten Abschnitt des Bohrlochs mit kleinerem Durchmesser ist der Hülsenkörper in axialer Richtung festgelegt. Der Hülsenkörper befindet sich dabei direkt an dem offenen Ende des Bohrlochs.

Es gibt zwei Methoden zum Einkleben von Stangen in Holzbauteile. 1. Versenkmethode: Bevor die Stange in Form einer Gewindestange in das Bohrloch mit dem eingesetzten Einsatzstück eingeführt wird, wird in das Bohrloch ein aushärtbarer Klebstoff in flüssiger Form eingebracht. 2. Injektionsmethode: Es wird zunächst die Gewindestange in das Loch eingebracht und anschließend wird der aushärtbare Klebstoff mittels mindestens eines Befülllochs eingebracht. Die eingeschlossene Luft muss hier entweder über den Spalt zwischen Stange und Lochwandung oder über ein Entlüftungsloch entweichen. Da der Außendurchmesser der Gewindestange kleiner ist als der Durchmesser des zweiten Abschnitts des Bohrlochs, verbleibt auch ein radialer Zwischenraum zwischen Innenwandung und Gewindestange. Dieser Innenraum wird durch den Klebstoff ausgefüllt. Der Klebstoff hält die Stange sicher in dem Bohrloch und sorgt für eine feste Verbindung zwischen Stange und Bohrloch. Kräfte, die auf die Stange wirken, werden somit über den im Bohrloch ausgehärteten Klebstoff in das Bauteil geleitet, in dem sich das Bohrloch befindet.

Das Einsatzstück der US 2021/0025436 A1 weist neben der Funktion der Zentrierung noch die Funktion der Abdichtung des Bohrlochs auf. Befindet sich die Mittelachse des Bohrlochs in der Horizontalen oder kopfüber, würde bei seiner Injektion in das Bohrloch der flüssige Klebstoff ohne eingesetztes Einsatzstück ungehindert aus dem Bohrloch tropfen können.

Die Zentrierung der Gewindestange erfolgt über den Sitz der Stange in dem Innenhohlraum des Hülsenkörpers, wobei dessen axiale Ausdehnung begrenzt ist. Entsprechend kann es hier leicht zu einer ungenauen Zentrierung bzw. zu einer nicht koaxialen Ausrichtung der Mittelachse der Stange mit der Mittelachse des Bohrlochs kommen.

Die der Erfindung zu Grunde liegende Aufgabe besteht darin, ein Einsatzstück zur Zentrierung einer Stange in einem Bohrloch bereitzustellen, welches eine einfache Handhabung und eine genaue Zentrierung erlaubt.

Die der Erfindung zu Grunde liegende Aufgabe wird mit dem Gegenstand gemäß Anspruch 1 gelöst. Ausführungsbeispiele können den Unteransprüchen zu Anspruch 1 entnommen werden.

Erfindungsgemäß ist vorgesehen, dass das Einsatzstück eine zusätzliche Zentriereinheit aufweist, die in einem Ursprungszustand des Einsatzstücks über wenigstens eine Sollbruchstelle mit dem Hülsenkörper verbunden ist und eine Auflagefläche für die axiale Anlage der Stange aufweist, sodass beim Einführen der Stange in das Bohrloch und nach erfolgter Trennung der Sollbruchstelle die Zentriereinheit mit der Stange axial mitbewegt wird, wobei sich ein axiales Ende der Stange in radialer Richtung über die Zentriereinheit an der Innenwandung der Bohrung abstützt. Durch die Einführung der Stange in das Bohrloch wird der axiale Abstand zwischen dem Hülsenkörper, der am offenen Ende des Bohrloches axial fixiert ist und sich daher nicht mitbewegt, vergrößert. Die Abstützpunkte, die für die Stange im Bohrloch durch das Einsatzstück nach erfolgter Einführung der Stange gegeben sind, liegen somit weit auseinander. Dabei stützt sich die Stange einerseits an dem feststehenden Hülsenkörper mit einem Stangenabschnitt ab, der sich in dem Innenhohlraum des Hülsenkörpers befindet. Andererseits stützt sich die Stange mit ihrem axialen Ende an der zusätzlichen Zentriereinheit ab, die beim Einführen von dem Hülsenkörper getrennt wird und durch die Stange innerhalb des Bohrlochs axial verschoben wird. Eine solche Zentrierung mit koaxialer Ausrichtung von Stange und Bohrloch ist genauer als eine Zentrierung durch lediglich eine einseitige Abstützung über den Hülsenkörper in der Nähe des offenen Endes des Bohrlochs.

Im Ursprungszustand bilden Hülsenkörper und Zentriereinheit über die Sollbruchstelle ein zusammenhängendes Element. Vorzugsweise handelt es sich dabei um ein einstückiges Spritzgussteil aus Kunststoff. Durch das Einführen der Stange in das Bohrloch wird bei zuvor eingesetztem Einsatzstück der axialer Abstand von Hülsenkörper und Zentrierelement und somit der Abstand der Abstützpunkte für die Stange automatisch vergrößert. Dies führt zu einer einfachen Handhabung des erfindungsgemäßen Einsatzstücks bei entsprechend genauer Zentrierung. Auch sei darauf hingewiesen, dass nach erfolgtem Aufbrechen der Sollbruchstelle Hülsenkörper und zusätzliche Zentriereinheit zwei voneinander getrennte Bauteile sind, die nicht mehr in Verbindung stehen. Gegenüber einen Hülsenkörper mit einer großen axialen Länge, die zu einem vergleichbaren Abstand der Abstützpunkte für die Stange führen würde, weist das erfindungsgemäße Einsatzstück den Vorteil auf, dass es nur einen kleinen Anteil der nutzbaren Klebefläche für den Klebstoff zwischen Innenwandung des Bohrlochs und Stange bedeckt. Entsprechend lässt sich bei Verwendung des erfindungsgemäßen Einsatzstücks eine hoch belastbare Klebverbindung mit großer Klebefläche zwischen Stange und Bohrloch verwirklichen.

Die Zentriereinheit kann wenigstens einen Distanzhalter mit einer Innenseite und mit einer Außenseite aufweisen, wobei die Innenseite zur Anlage an der Stange und die Außenseite zur Anlage an der Innenwand des Bohrlochs dienen. Ein radialer Abstand zwischen Stange und Innenwandlung des Bohrloches wird daher durch die Dicke des Distanzhalters festgelegt. In einem Ausführungsbeispiel beträgt die Dicke des Distanzhalters 0,5 bis 2 mm. Der Distanzhalter erstreckt sich dabei nicht über die gesamte Länge der Gewindestange und/oder über den gesamten Umfang der Gewindestange. Über die Dicke des Distanzhalters werden der radiale Spalt oder Zwischenraum zwischen Stange und Innenwand des Bohrloches und somit die Stärke der Klebstoffschicht zwischen Stange und zwischen Innenwand festgelegt.

Der Distanzhalter kann als länglicher, sich in axialer Richtung erstreckender Steg ausgebildet sein. Die Breite des Distanzhalters, also die Ausdehnung in Umfangsrichtung der Stange bzw. Innenwand des Bohrloches, kann dabei 5 bis 30% der Länge des Distanzhalters betragen.

In einem Ausführungsbeispiel wird die Sollbruchstelle durch einen Verbindungssteg zwischen einem ersten axialen Ende des Distanzhalters und einer der Zentriereinheit zugewandten Stirnfläche des Hülsenkörpers gebildet. Die Materialstärke des Verbindungsstegs ist dabei vorzugsweise so ausgelegt, dass bei der normalen Handhabung des Einsatzstücks die Zentriereinheit sich nicht unbeabsichtigt von dem Hülsenkörper löst. Die Zentriereinheit kann somit nicht verloren gehen. Die aufzubringende Kraft zur Trennung des Verbindungsstegs darf aber auch nicht zu groß sein, damit sich beim Einführen der Stange in das Bohrloch die Zentriereinheit leicht vom Hülsenkörper trennen lässt und das Einführen der Stange nicht blockiert wird.

Vorzugsweise sind wenigstens zwei Distanzhalter vorgesehen. In einem Ausführungsbeispiel sind drei Distanzhalter vorgesehen, die in Umfangsrichtung gesehen einen Abstand von 120° zu einem benachbarten Distanzhalter aufweisen können. In einem anderen Ausführungsbeispiel sind vier Distanzhalter vorgesehen, wobei ein Abstand zwischen benachbarten Distanzhalter bevorzugt jeweils 90° beträgt.

Zwischen den Distanzhalter verbleiben Lücken, in denen die Stange und die Innenwand nicht durch Bauteile der Zentriereinheit bedeckt sind und somit als nutzbare Klebefläche zwischen Stange und Innenwand der Bohrung zur Verfügung stehen. Außerdem erlauben sie im Gegensatz zu einem etwaigen ringförmigen Abstandhalter den freien Fluss des Klebstoffs entlang der Stabachse. Der Anteil der Fläche, die durch die Distanzhalter 18 abgedeckt ist, an der gesamten Umfangsfläche der Zentriereinheit (in dem axialen Bereich, in dem sich die Distanzhalter erstrecken) ist bevorzugt kleiner als 40 % und ganz bevorzugt kleiner als 25 %. Bei einem Anteil von 25 % verbleiben demnach 75 % der Umfangsfläche für die nutzbare Klebefläche in dem axialen Bereich, in dem sich die Distanzhalter erstrecken.

Die wenigstens zwei Distanzhalter können an einem zweiten axialen Ende durch eine Verbindungsbrücke miteinander verbunden sind. Bei drei Distanzhalter sorgt die Verbindungsbrücke für einer Verbindung der drei Distanzhalter untereinander. Die Verbindungsbrücke kann dabei die Auflagefläche zur axialen Anlage der Stange umfassen. Die Verbindungsbrücke nimmt dabei die Kräfte, die von der Stange auf die zusätzliche Zentriereinheit wirken, auf und leitet diese auf die Distanzhalter weiter, wenn die Stange axial in das Bohrloch eingeführt wird.

An einem äußeren Ende des Hülsenkörpers kann ein Kragen mit einer kegelförmigen Anlagefläche ausgebildet sein. Die kegelförmigen Anlagefläche dient dabei einerseits zur Zentrierung des Hülsenkörpers in dem Bohrloch und andererseits zur Abdichtung des Bohrloches, sodass nicht ungewollt flüssiger Klebstoff aus dem Bohrloch tropft.

An der Außenfläche des Hülsenkörpers kann wenigstens eine umlaufende Dichtlippe angeordnet sein. Vorzugsweise ist die umlaufende Dichtlippe an einem innenliegenden Ende des Hülsenkörpers angeordnet. Durch die Dimensionierung der Dichtlippe kann eine gewisse Flexibilität eingestellt werden, sodass sich die Dichtlippe beim Einfügen des Einsatzstücks in das Bohrloch an der Innenwandung anschmiegt.

Der Hülsenkörper kann einen axialen Schlitz zur Ausbildung eines Kanals aufweisen, durch den Luft und/oder ein Überschuss an Klebstoff aus dem Bohrloch entweichen kann. Vorzugsweise wird dabei das Einsatzstück so in ein horizontal verlaufendes Bohrloch gesetzt, dass der axiale Schlitz nach oben zeigt.

Der Klebstoff wird vorzugsweise vor dem Einführen der Stange in das Bohrloch eingebracht. Wenn danach die Stange axial in das Bohrloch geschoben oder axial durch eine Schraubbewegung hineingedreht wird, kann die dadurch aus dem Bohrloch verdrängte Luft bzw. der überschüssige Klebstoff aus dem Bohrloch entweichen.

Anhand der in der Zeichnung dargestellten Ausführungsbeispiele wird die Erfindung näher erläutert. Es zeigen:
- Figur 1: ein erfindungsgemäßes Einsatzstück in einer perspektivischen Ansicht;
- Figur 2: das Einsatzstück der Figur 1 in einer weiteren perspektivischen Ansicht;
- Figur 3: das Einsatzstück der Figur 1 in einer Seitenansicht;
- Figur 4: das Einsatzstück der Figur 1 von unten;
- Figur 5: das Einsatzstück der Figur 1 von oben;
- Figur 6: das Einsatzstück und ein Bohrloch in verschiedenen Zuständen; und
- Figur 7: ein alternatives Einbringen von Klebstoff in ein Bohrloch

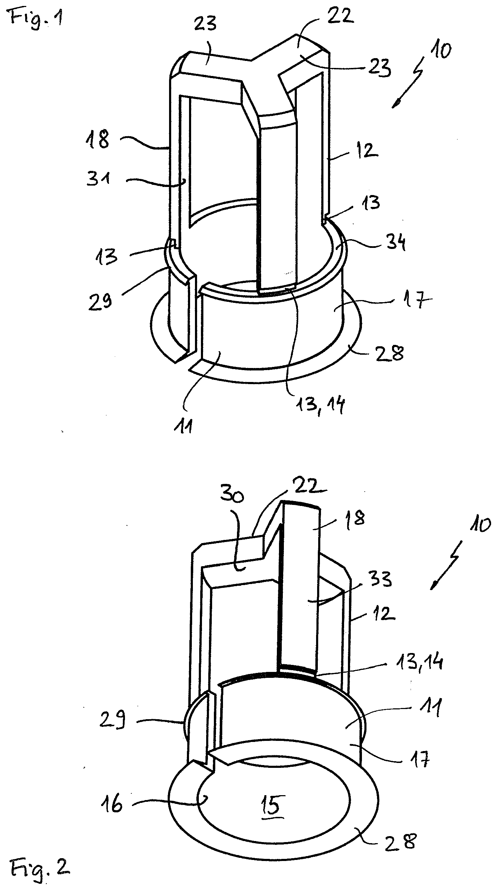

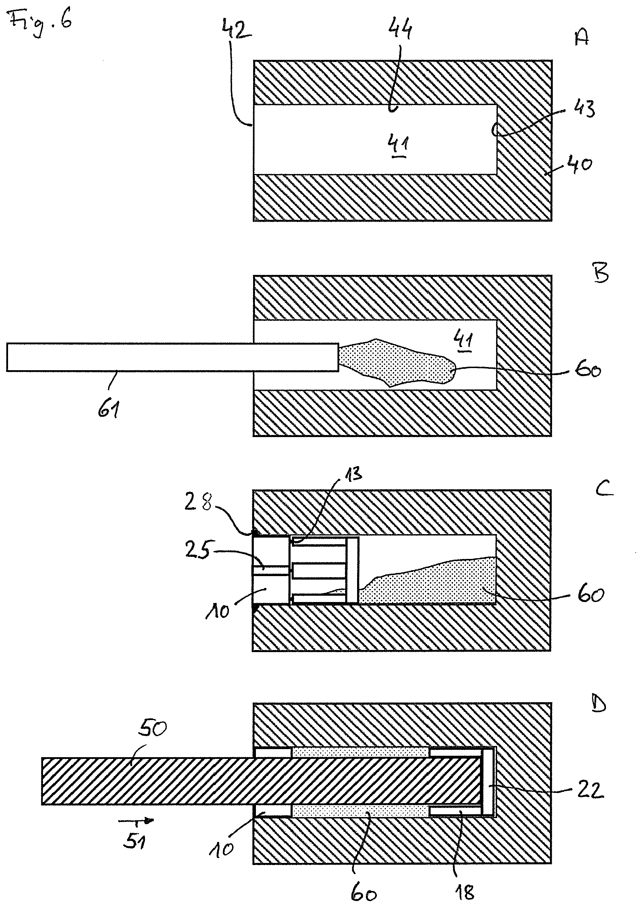

Die Figuren 1 bis 5 zeigen ein erfindungsgemäßes Einsatzstück in verschiedenen Ansichten. Das Einsatzstück wird in seiner Gesamtheit mit 10 bezeichnet. Wie aus Figur 6 hervorgeht, lässt sich das Einsatzstück 10 in ein Bohrloch 41 eines Bauteils 40 stecken. Das Bauteil kann beispielsweise eine Brettsperrholzplatte oder ein Brettschichtholzbalken sein. Das Bohrloch 41 dient dabei zur Aufnahme einer Stange 50, die sich über einen Klebstoff 60 fest mit dem Bohrloch 41 bzw. mit dem Bauteil 40 verbinden lässt. Die Stange 50 kann als Gewindestange ausgebildet sein, die über ihre gesamte Länge ein Gewinde aufweist. Auf Figur 6 wird später noch näher eingegangen.

Das Bauteil 40 kann auch aus einem anderen Material sein, beispielsweise aus Beton. Die Stange 50 kann ein Bewehrungsstab aus Stahl oder einem Faserverbundwerkstoff sein. Der Begriff "Bohrloch" soll auch Löcher umfassen, die nicht nur durch einen Bohrvorgang, sondern auch durch andere Verfahren in das Bauteil 40 eingebracht werden können.

Das Einsatzstück 10 umfasst einen Hülsenkörper 11 und eine zusätzliche Zentriereinheit 12, die über drei Sollbruchstellen 13 miteinander verbunden sind. Jede Sollbruchstelle 13 ist in Form eines dünnen Verbindungsstegs 14 ausgebildet.

Der Hülsenkörper 11 weist einen Innenhohlraum 15 auf, der von einer Innenfläche 16 begrenzt wird. Eine Außenfläche 17 des Hülsenkörpers 11 steht in Gebrauchslage des Einsatzstücks 10 einer zylindrischen Innenwand 44 des Bohrlochs gegenüber. Die Gebrauchslage ist in Figur 6B dargestellt und entspricht der Position des Einsatzstücks 10, wenn es in das Bohrloch 41 eingesetzt ist.

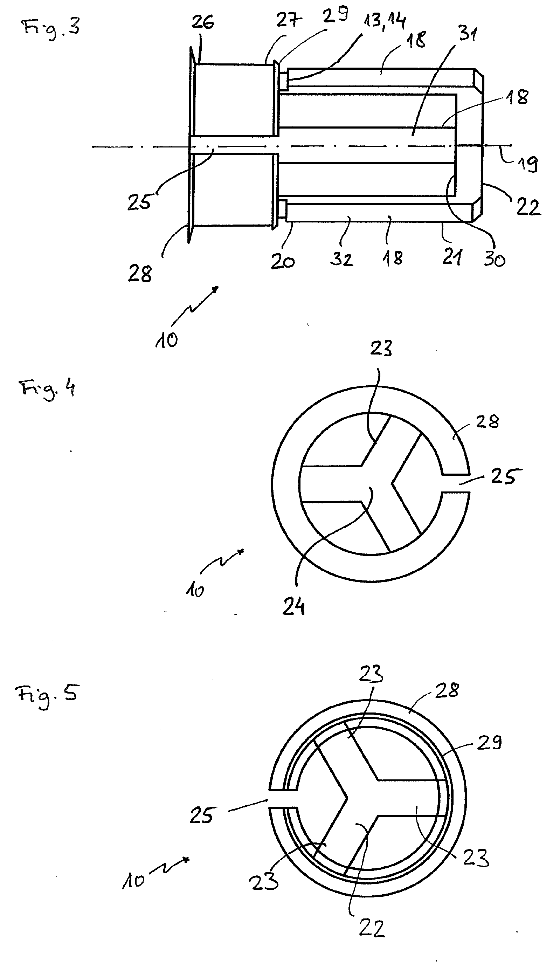

Die Zentriereinheit 12 weist drei Distanzhalter 18 auf, die sich entlang einer Mittelachse 19 (siehe Figur 3) in axialer Richtung erstrecken. In Umfangrichtung gesehen sind die Distanzhalter 18 jeweils um 120° voneinander beabstandet. An einem ersten axialen Ende 20 eines jeden Distanzhalters 18 ist der besagte Verbindungssteg 14 angeformt, der die Verbindung zum Hülsenkörper 11 darstellt. Der Verbindungssteg 14 ist dabei mit einer der Zentriereinheit 11 zugewandten Stirnfläche 34 des Hülsenkörpers 11 verbunden. Die Figuren 1 bis 5 stellen das Einsatzstück 10 in seinem Ursprungszustand dar, also in einem Zustand, in dem die Verbindungsstege 14 intakt sind und Hülsenkörper 11 und Zentriereinheit 12 über die drei Verbindungsstege 14 verbunden sind.

An einem zweiten axialen Ende 21 eines jeden Distanzhalters 18 ist eine Verbindungsbrücke 22 angeformt, die die axialen Enden 21 der drei Distanzhalter 18 miteinander verbindet. Die Verbindungsbrücke 22 weist drei Radialschenkel 23 auf, die in einem mittleren Bereich 24 der Verbindungsbrücke 22 zusammenlaufen. Jedem Distanzhalter 18 kann ein Radialschenkel 23 zugeordnet werden, der sich im rechten Winkel vom Distanzhalter 18 ausgehend radial nach innen zum mittleren Bereich 24 erstreckt.

Aus den Figuren 1 bis 5 wird auch deutlich, dass der Hülsenkörper 11 einen Schlitz 25 aufweist, der sich von einem äußeren stirnseitigen Ende 26 bis zu einem inneren, der Zentriereinheit 11 zugewandten stirnseitigen Ende 27 erstreckt. An dem äußeren Ende 26 ist ein Kragen 28 angeformt, der die Form eines Kegelstumpfs aufweist. In Gebrauchslage des Einsatzstücks 10 ist die Kegelfläche des Kegelstumpfs dem Bohrloch 41 zugewandt. Am inneren Ende 27 ist eine Dichtlippe 29 vorgesehen, die gemeinsam mit dem Kragen 28 für eine Abdichtung des Bohrlochs 41 sorgt. Durch die Abdichtung soll verhindert werden, dass der flüssige Kunststoff 60, der in das Bohrloch 41 eingebracht wird, nicht aus diesem direkt wieder heraustropft.

Die Figuren 6A bis 6D zeigen eine Möglichkeit, in welcher Reihenfolge das Einsatzstück 10, der Kunststoff 60 und die Stange 50 in das Bohrloch 41 eingebracht werden. Zunächst wird in das anfänglich leere Bohrloch 41 (Figur 6A) der Klebstoff eingespritzt. Dafür kann eine Injektionsdüse 61 verwendet werden (siehe Figur 6B). Als Klebstoff kann beispielsweise ein aushärtbarer Zweikomponenten-Klebstoff verwendet werden. Vorzugsweise handelt es sich dabei um ein Polyurethan-Klebstoff. Ein solcher Klebstoff ist von der Firma Henkel unter dem Markennamen LOCTITE CR 821 PURBOND erhältlich. Auch Epoxid-Klebstoffe können zum Verkleben der Stange 50 in dem Bohrloch 41 verwendet werden.

Nachdem der Klebstoff 60 in das Bohrloch 41 eingespritzt worden ist, wird nun das Einsatzstück 10 in das Bohrloch 41 hineingeschoben (Figur 6C). Das Einsatzstück 10, welches in Figur 6 nur schematisch dargestellt ist und in seiner dortigen Ansicht der Ansicht der Figur 3 entspricht, findet dabei seine axial festgelegte Position in der Nähe eines offenen Endes 42 des Bohrloches 41. Der umlaufende Kragen 28, dessen Außendurchmesser größer als der Durchmesser des Bohrloches 41 ist, verhindert dabei, dass das Einsatzstück 10 noch weiter in das Bohrloch 41 eingedrückt werden kann. Der Kragen 28 legt somit die axiale Lage des Einsatzstücks 10 fest und zentriert es in dem Bohrloch 41. Zudem dient der Hülsenkörper 11 bzw. der Kragen 28 zur Abdichtung des Bohrlochs 41, sodass der Klebstoff 41 nicht ungehindert oder unkontrolliert aus dem Bohrloch 41 fließen kann.

Nach erfolgtem Eintrag des Klebstoffs 60 und dem Einsetzen des Einsatzstücks 10 wird nun die Stange 50 an das Bohrloch 41 bzw. dem Einsatzstück 10 gehalten, koaxial zum Bohrloch 41 ausgerichtet und dann entlang des Pfeils 5 axial in das Bohrloch 41 eingeführt. Wenn beim Einführen der Stange 50 ein vorderes Ende 52 gegen eine Auflagefläche 30 der Zentriereinheit 12 stellt, wirken auf die drei Verbindungsstege 14 zwischen Hülsenkörper 11 und Zentriereinheit 12 eine Zugkraft. Die drei Distanzhalter 18 mit der Verbindungsbrücke 22 bilden für das vordere Ende 52 der Stange 50 eine korbförmige Aufnahme, die das Ende 52 in Umfangsrichtung umgreift.

Nach Erreichen der Festigkeitsgrenze reißen die Verbindungsstege 14, sodass die Zentriereinheit 11 sich nun mit der Stange 50 im Bohrloch 41 entlang bewegen kann. Eine axiale Endlage von Stange 50 und der auf dem vorderen Ende sitzenden Zentriereinheit 11 kann dann erreicht sein, wenn die Zentriereinheit gegen das geschlossene Ende 43 des Bohrlochs 41 stößt (siehe Figur 6D).

Aus der Figur 6D ist ersichtlich, dass für die Zentrierung der Stange 50 in dem Bohrloch 41 die vollständige Länge des Bohrlochs 41 ausgenutzt werden kann, da sich der Hülsenkörper 11 an dem offenen Ende 42 und sich die Zentriereinheit 11 an dem geschlossenen Ende 43 befinden.

Die Stange 50 liegt an einer Innenseite 31 des Distanzhalters 18 an, während eine Außenseite 32 des Distanzhalters 18 an einer zylindrischen Innenwand 44 des Bohrlochs 41 anliegt. Der radiale Abstand von Innenseite 31 und Außenseite 32, also die radiale Dicke des Distanzhalters 18, entspricht der Schichtdicke des Klebstoffes 60 zwischen Stange 50 und zylindrischer Innenwand 44 (der Einfluss der Gewindetiefe bleibt hier unberücksichtigt).

Nicht nur im axialen Abschnitt des Bohrlochs 41 zwischen dem Hülsenkörper 11 und der Zentriereinheit 12, sondern auch in den Lücken zwischen den Distanzhaltern 18 kann der Klebstoff 60 die Innenwand 44 und die Stange 44 kontaktieren. Dies führt zu einer großen nutzbaren Klebefläche für den Klebstoff. Jeder Distanzhalter 18 ist als länglicher dünner Steg 33 ausgebildet, sodass die bedeckte Kontaktfläche zwischen Distanzhalter 18 und Innenwand 44 bzw. Stange 50 klein ist. Nachdem der Klebstoff 60 ausgehärtet ist, ist die Stange 50 im Bohrloch 41 verankert.

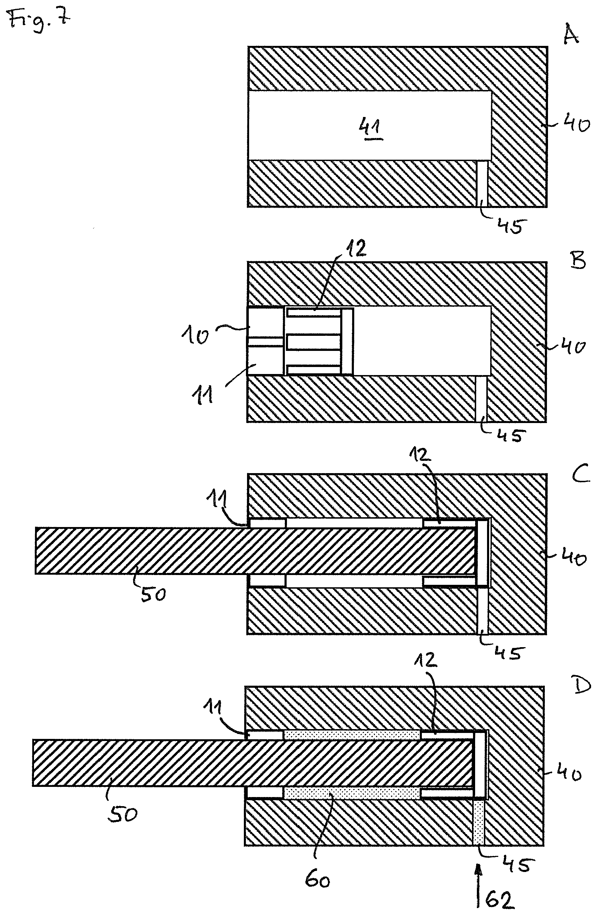

Figur 7 zeigt ein weiteres Verfahren, wie die Stange 50 und der Klebstoff 60 in das zunächst leere Bohrloch 41 (siehe Figur 7A) eingebracht werden können. In dem Bauteil 40 ist noch eine Querbohrung (Befüllloch) 45 vorgesehen, die hier senkrecht zur Mittelachse des Bohrlochs 41 verläuft und in der Nähe des geschlossenen Endes 43 auf das Bohrloch 41 trifft. Nach dem Einsetzen des Einsatzstücks 10 (Figur 7B) und nach dem vollständigen Einführen der Stange 50 in das Bohrloch 41 (siehe Figur 7C) wird der Klebstoff 60 durch die Querbohrung 45 dem Bohrloch 41 zugeführt (siehe Pfeil 62 in Figur 7D). Der Klebstoff 60 verteilt sich entlang der Stange 50 im Bohrloch 41. Luft und überschüssiger Klebstoff können durch den Schlitz 25 des Einsatzstücks 10 aus dem Bohrloch 41 entweichen.

Alternativ zu den in den Figuren 6 und 7 beschriebenen Vorgehen kann das Einsatzstück 10 auf das vordere Ende 52 gesetzt werden, bevor die Stange 50 in das Bohrloch 41 eingeführt wird.

### Bezugszeichenliste

- 10: Einsatzstück
- 11: Hülsenkörper
- 12: Zentriereinheit
- 13: Sollbruchstelle
- 14: Verbindungssteg
- 15: Innenhohlraum
- 16: Innenfläche
- 17: Außenfläche
- 18: Distanzhalter
- 19: Mittelachse
- 20: erstes axiales Ende
- 21: zweites axiales Ende
- 22: Verbindungsbrücke
- 23: Radialschenkel
- 24: mittlerer Bereich
- 25: Schlitz
- 26: äußeres Ende
- 27: inneres Ende
- 28: Kragen
- 29: Dichlippe
- 30: Auflagefläche
- 31: Innenseite
- 32: Außenseite
- 33: Steg
- 34: Stirnfläche
- 40: Bauteil
- 41: Bohrloch
- 42: offenes Ende
- 43: geschlossenes Ende
- 44: zylindrische Innenwand
- 45: Querbohrung / Befüllloch
- 50: Stange / Gewindestange
- 51: Pfeil / Richtung
- 52: vorderes / axiales Ende
- 60: Klebstoff
- 61: Injektionsdüse
- 62: Pfeil (Zuführung von Klebstoff)

## Patentansprüche

1. Einsatzstück (10) zur Zentrierung einer Stange (50) in einem Bohrloch (41), in dem sich Klebstoff (60) befindet, der zur Verankerung der Stange (50) in dem Bohrloch (41) dient, wobei das Einsatzstück (10) einen Hülsenkörper (11) mit einem Innenhohlraum (15) zur Aufnahme der Stange (50) und eine Außenfläche (16) aufweist, wobei in Gebrauchslage des Einsatzstücks (10) der Hülsenkörper (11) an einem offenen Ende (42) des Bohrlochs (41) axial festgelegt ist und die Außenfläche (15) des Hülsenkörpers (11) einer Innenwand (44) des Bohrlochs (41) gegenübersteht, **dadurch gekennzeichnet, dass** eine zusätzliche Zentriereinheit (12) vorgesehen ist, die in einem Ursprungszustand des Einsatzstücks (10) über wenigstens eine Sollbruchstelle (13) mit dem Hülsenkörper (10) verbunden ist und eine Auflagefläche zur axialen Anlage der Stange (50) aufweist, sodass beim Einführen der Stange (50) in das Bohrloch (41) und nach erfolgter Trennung der Sollbruchstelle (13) die Zentriereinheit (12) mit der Stange (50) axial mitbewegt wird, wobei sich ein axiales Ende (52) der Stange (50) in radialer Richtung über die Zentriereinheit (11) an der Innenwand (44) des Bohrlochs (41) abstützt.

2. Einsatzstück (10) nach Anspruch 1, **dadurch gekennzeichnet, dass** die Zentriereinheit (12) wenigstens einen Distanzhalter (18) mit einer Innenseite (31) und mit einer Außenseite (32) aufweist, wobei die Innenseite (31) zur Anlage an der Stange (50) und die Außenseite (32) zur Anlage an der Innenwand (44) des Bohrlochs (41) dienen.

3. Einsatzstück (10) nach Anspruch 2, **dadurch gekennzeichnet, dass** eine Dicke des Distanzhalters (18) 0,5 bis 2 mm beträgt.

4. Einsatzstück (10) nach Anspruch 2 oder 3, **dadurch gekennzeichnet, dass** der Distanzhalter (18) als länglicher, sich in axialer Richtung erstreckender Steg (33) ausgebildet ist.

5. Einsatzstück (10) nach einem der Ansprüche 2 bis 4, **dadurch gekennzeichnet, dass** die Sollbruchstelle (13) durch einen Verbindungssteg (14) zwischen einem ersten axialen Ende (20) des Distanzhalters (18) und einer der Zentriereinheit (12) zugewandten Stirnfläche des Hülsenkörpers (11) gebildet wird.

6. Einsatzstück (10) nach einem der Ansprüche 2 bis 5, **dadurch gekennzeichnet, dass** wenigstens zwei in Umfangsrichtung zueinander beabstandete Distanzhalter (18) vorgesehen sind.

7. Einsatzstück (10) nach Anspruch 6, **dadurch gekennzeichnet, dass** die wenigstens zwei Distanzhalter (18) an einem zweiten axialen Ende (21) durch eine Verbindungsbrücke (22) miteinanderverbunden sind.

8. Einsatzstück (10) nach einem der Ansprüche 1 bis 7, dass an einem äußeren Ende (26) des Hülsenkörpers (11) ein Kragen (28) mit einer kegelförmigen Anlagefläche ausgebildet ist.

9. Einsatzstück (10) nach einem der Ansprüche 1 bis 8, **dadurch gekennzeichnet, dass** an der Außenfläche (17) des Hülsenkörpers (11) wenigstens eine umlaufende Dichtlippe (29) angeordnet ist.

10. Einsatzstück (10) nach einem der Ansprüche 1 bis 9, **dadurch gekennzeichnet, dass** der Hülsenkörper (11) einen axialen Schlitz (25) zur Ausbildung eines Kanals aufweist, durch den Luft oder ein Überschuss an Klebstoff (60) aus dem Bohrloch (41) entweichen kann.
